# EUROPEAN PATENT SPECIFICATION

(11) **EP 3 017 533 B1**
(45) Date of publication and mention of the grant of the patent: **23.09.2020**
(21) Application number: 14746944.9
(22) Date of filing: 04.07.2014
(51) Int. Cl.: H02M 1/44, H02M 3/155, H02K 11/026, H02K 7/06

(54) **ACTUATOR SYSTEM**
AKTUATORSYSTEM
SYSTÈME D'ACTIONNEUR

(30) Priority: 04.07.2013 DK 201300408
(43) Date of publication of application: 11.05.2016
(73) Proprietor: Linak A/S, 6430 Nordborg (DK)
(72) Inventor: BASTHOLM, Jeppe Christian, DK-6400 Sønderborg (DK)
(74) Representative: Høyer, Michael
(86) International application number: PCT/DK2014/000037
(87) International publication number: WO 2015/000484

(56) References cited:
- WO-A1-97/05716
- WO-A2-2013/004232
- DE-A1-102008 000 887
- FR-A1- 2 977 084
- US-A- 6 078 117
- US-A1- 2003 127 913
- US-A1- 2011 018 377
- US-B1- 6 229 226

## Description

The invention relates to an actuator system comprising at least one housing, at least one electrically driven linear actuator with an electric motor, a transmission, a spindle connected to the electric motor via the transmission, on said spindle a spindle nut is mounted, and an electric controller with an operating unit, a first circuit for a first electrical noise dampening of the electric motor comprising a first inductance and at least one capacitor, a second circuit for a second electrical noise dampening of the motor, arranged between the first circuit for the first electrical noise dampening of the electric motor and the electric controller comprising a second inductance.

Actuator systems with linear electrically driven actuators are widely used within the field of adjustable furniture, such as e.g. adjustable tables, adjustable beds and chairs. Linear electrically driven actuators are moreover used in countless other industrial products, in which a linear electrically driven actuator for adjusting a mechanical moveable component is expediently integrated in a mechanical structure.

For a manufacturer it is possible to purchase a complete actuator system with linear electrically driven actuators and a controller for simple integration into the product concerned. This provides the advantage that the manufacturer can focus on the product without regard for actuator specific problems, which have already been taken into consideration by the manufacturer of the actuator. Here, particularly reduction of electrical and magnetic noise, which is subject to regulatory legal requirements, is considered. Generation of noise mainly relates to the use of DC motors, where the brushes of the commutator in the electrical connection with the coils of the armature, during operation of the motor, continuously switches the power supply to the coils of the armature for creating a torque. The inductive effect of the coils during the commutation will generate electrical noise, which will propagate back towards the controller.

There is, however, a tendency in the marked towards the manufacturer wishing to buy the linear electrically driven actuator separately and creating an extension to his own controller in preparation for controlling and driving the linear electric actuator directly therefrom. This provides obvious financial advantages and a simpler construction.

However, new challenges arise in connection with the mandatory noise dampening. This challenge is present even though the manufacturer of the actuator builds noise dampening means into the actuator. This is owing to the fact that the circuit for noise dampening of the electrically driven actuator will have to be designed differently depending on how the customer wishes to control the actuator.

The most common type of noise dampening of a DC motor is by insertion of inductance connected in series between the commutator and the terminals of the DC motor, which effectively prevents the noise from propagating back towards the controller. Capacitors are located in parallel over the terminals for connection with the controller, said capacitors effectively absorbing the energy of the high-frequency noise generated by the commutation. These capacitors are connected to the motor housing through one of the terminals.

This manner of noise dampening of a DC motor is for that matter fine if the DC motor is driven directly from a regulated DC supply, such as e.g. a battery or a power supply, by direct operation of a switch, which connects and interrupts the supply to the DC motor.

In case it is desired to control the motor by pulse width modulation of the operating voltage, e.g. by means of a switch-mode controller, with the appertaining advantages with regard to energy efficiency and speed control, the noise dampening will complicate the controlling of the DC motor. The presence of the capacitor will result in that a large current for charging as well as discharging of the capacitor will run during the switching. Transistors are normally used as switches, typically of the FET type, which when fully equipped or open, have a low ON-resistance. When the switch is closed, the ON-resistance is high. The speed of the shift between the on and off state is however crucial to the switch loss i.e. how much power is dissipated in the transistor, when the transistor is switched on or off - the higher the current the larger the switch loss. If the frequency of the pulse-width modulation is increased the switch loss is needless to say increased correspondingly. In other words, the noise dampening capacitor will cause a large energy loss during switching, which counteracts the advantages, which the customer wishes to achieve by using pulse-width modulation of the operating voltage of the motor. Likewise, demands are made on the transistor in the switch-mode controller, for it to be able to handle the high peak current without being damaged.

This can be overcome by inserting an inductance in the output stage of the switch-mode controller, which dampens the switch current. Insertion of such an inductance is however price-raising for the construction. Moreover, the manufacturer will have to handle the building-in himself. Alternatively, the manufacturer of the actuator can provide different configurations of the actuator, where the customer actively must choose the configuration, which fits the desired manner of controlling.

An actuator system with an electrically driven linear actuator controlled from an electric controller with an operating unit is known from WO 2013/004232 A2. Electrical noise dampening of the electric motor of the linear actuator is not described in this document.

US 6 078 117 A discloses an end cap assembly configured as a noise filter for incorporation as the end cap of a motor housing case of an electric motor. The shown noise filter has two series connected inductors in each current supply lead of the electric motor, and capacitors are connected from the connection between the series connected inductors of each supply lead to the motor case, which is also connected to ground. A further capacitor is connected between the two connections between the series connected inductors. Constructional details and/or the arrangement of the series connected inductors relative to each other are not mentioned.

It is thus challenging in terms of logistics, with significant costs involved for both the actuator manufacturer as well as the customer, to ensure that the actuator is equipped with means for noise dampening, which fit the manner in which the customer wishes to supply and control the DC motor of the actuator. There is a possible risk of the customer choosing an actuator with an inadequate or inappropriate noise dampening resulting in the appertaining disadvantages in terms of error correction etc.

The purpose of the invention is to provide a solution to the outlined problem, i.e. to provide a circuit for noise dampening of a DC motor in a linear electric actuator, which may be used both for DC operation as well as for pulse-width modulated operation of the motor. A solution is further desired, which is more compact and not vastly price-raising, if possible a more inexpensive or a price-neutral solution.

This is achieved according to the invention by designing the actuator system as stated in claim 1, comprising two coils, each comprising a first section, a second section and a tap located between said first and second sections, wherein the first section constitutes one of said first inductances and the second section constitutes one of said second inductances

More specifically, the actuator system comprises at least one housing, at least one electrically driven linear actuator with an electric motor, a transmission, a spindle connected to the electric motor via the transmission, on said spindle a spindle nut is mounted, and an electric controller with an operating unit, a first circuit for a first electrical noise dampening of the electric motor comprising first inductances and two capacitors, each of said first inductances having one end connected to one of the brushes of the motor, a second circuit for a second electrical noise dampening, arranged between the first circuit for a first electrical noise dampening of the electric motor and the electric controller, comprising second inductances and a capacitor, and two coils, each comprising a first section, a second section and a tap located between said first and second sections, wherein the first section constitutes one of said first inductances and the second section constitutes one of said second inductances, wherein the capacitor of the second circuit is connected between the taps, and each capacitor of the first circuit is connected between one of the taps and the motor housing

The arrangement according to the invention thus moves a component located outside the electric motor and the actuator (normally arranged in the controller) and assembles this with a component located with the electric motor in the motor housing, thus creating a compact solution, which moreover is more cost-efficient, as the price of the combined component is only slightly higher than the component originally located in the motor housing. The combination is not self-evident as the two components, which are integrated, regardless of being the same nature, are inserted with different purposes and contribute to a very different technical effect in the construction.

Depending on the wire thickness and the choice of material for the winding of the coil, the winding can constitute a self-supporting mechanical construction and thus does not require support. However expediently, the housing of the electric motor is furnished with means for retaining the coil during mounting and operation, such that the electric conductors are arranged isolated in a manner to avoid short-circuiting.

If the conductors of the winding are made from a material or are of such a dimension that the coil does not constitute a self-supporting mechanical construction, the winding can be wound on one and the same coil form.

In that the coil for the first and the second noise dampening is wound on the same coil form a more compact design is achieved, as it to a greater extent is the coil form rather than the windings on it, which take up space. Thus, the costs of a coil form are also saved.

The winding machine can wind the two sections of the coil in one cycle, which further saves costs. In this embodiment both windings can be independent without electrical connection between the two windings.

Further costs can be saved by winding the first section and the second section of the coils as one interconnected winding with a tap, said tap being a common midpoint, which divides the coils into two sections.

The coil can as a unit or individually, on each of the two sections, be furnished with a core consisting of a material containing ferrite. Thus, the inductance of the coil is improved, for which reason a physically smaller coil will be sufficient for the necessary noise dampening with the appertaining advantages in the form of a more compact design and cost savings.

As the solution is compact the coil and the additional components in the first and second circuit for electrical noise dampening of the motor are expediently arranged in the housing of the motor or mounted on the terminals of the motor.

In another embodiment the coil and the additional components in the first and second circuit for electric noise dampening of the motor are arranged in the controller. The electrical noise from a non-silenced motor in an electric actuator will in this embodiment nevertheless be sufficiently dampened.

In a further embodiment the coil and the additional components in the first and second circuit for electrical noise dampening of the motor are arranged in the housing of the actuator. The electric actuator can be equipped with a printed circuit board, on which discrete electrical components are mounted. This printed circuit board can be fitted with the components for the electrical noise dampening of the motor. In yet another embodiment the components are arranged in the cable connection, connected to the electric motor, or are mounted directly in the socket for the plug connection to the motor.

In an embodiment the coil and the additional components in the first and second circuit for electrical noise dampening are arranged in a separate housing. The housing can be furnished with appropriate plug connections such that this can be inserted between the motor in the electric actuator and the controller. The housing can also be equipped with a through-going cable connection, which with appropriate plug connections can be inserted between the motor in the electric actuator and the controller.

A linear electric actuator system according to the invention will be described more fully below with reference to the accompanying drawing, in which:
Fig. 1 shows a schematic view of a hospital or care bed comprising an actuator system in a first embodiment,
Fig. 2 shows a schematic view of a hospital or care bed comprising an actuator system in another embodiment,
Fig. 3 shows a block diagram of the actuator system on the beds shown in Fig. 1,
Fig. 4 shows a linear actuator,
Fig. 5 shows the linear actuator in Fig. 4, where the motor housing and the outer tube have been partially removed,
Fig. 6 shows a diagram of an arrangement for electrical noise dampening of a motor for an output stage of a controller,
Fig. 7 shows a picture of the components of the electrical noise dampening according to the diagram in Fig. 6,
Fig. 8 shows a disassembled motor such that the components of the electrical noise dampening according to the diagram in Fig. 6 are visible, and
Fig. 9 shows the same picture as Fig. 8, in which the components of the electrical noise dampening have been sketched to highlight their position.

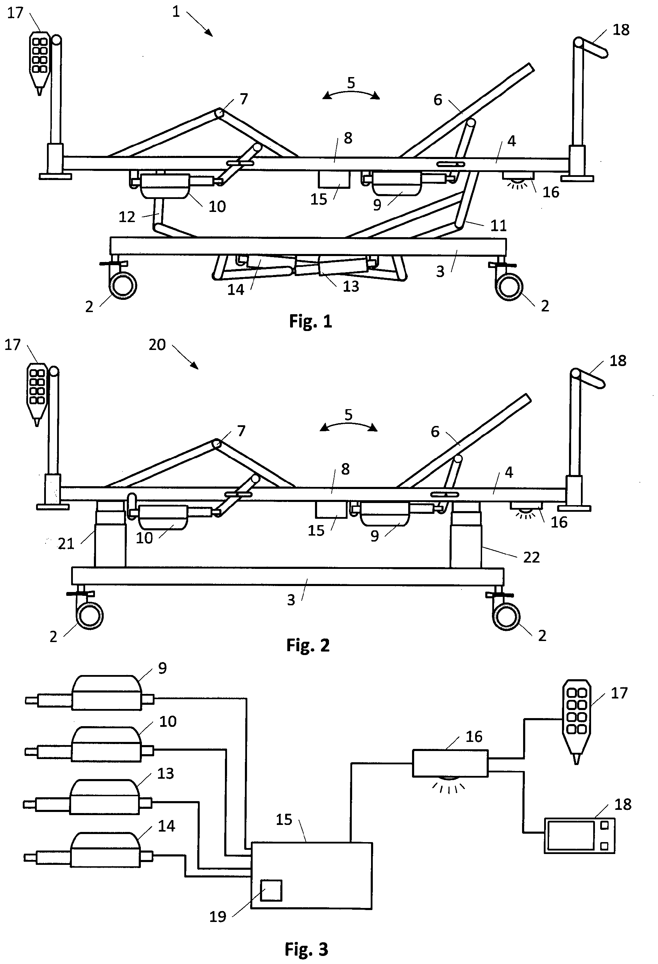

Fig. 1 shows a hospital bed 1 with a lower frame 3 equipped with drive wheels 2 and an upper frame 4. The upper frame 4 is fitted with an adjustable carrying surface 5 for a mattress (not shown). The carrying surface 5 comprises a back rest section 6, an articulated leg rest section 7 and a fixed middle section 8 between these. The back rest and leg rest section 6,7 can be adjusted by means of an actuator 9,10 each, such that the carrying surface 5 can assume different contours. The upper frame 4 is connected to the lower frame 2 with a link mechanism 11,12 at each end. The upper frame 4 can be raised and lowered by means of a pair of actuators 13,14 connected to the link mechanisms 11,12. All the actuators 9,10,13,14 are connected to a control box 15 containing a controller 19 (see fig. 3). The control box 15 can be connected to mains and can e.g. be equipped with a power supply. The control box 15 can further comprise a rechargeable battery pack.

A junction box 16 is connected to the control box 15 for connecting one or more operating units, such as a hand control 17 and an operating panel 18 integrated into the headboard of the bed, as well as possible other peripheral equipment. The assembled system comprising the actuators 9,10,13,14, the control box 15 and operating units 17,18 is known as an actuator system. It is understood that the operating units 17,18 in an embodiment can also be directly connected to the control box 15. Thus, such an embodiment of the actuator system does not comprise a junction box.

Fig.2 shows a schematic view of a hospital and care bed 20 in a different embodiment than the bed in fig. 1. Here, the lower frame 3 and the upper frame 4 is not connected by means of link mechanisms, but are instead connected via two linear actuators designed as lifting columns 21,22.

Fig. 3 shows a block diagram of the actuator system on the bed in fig. 1.

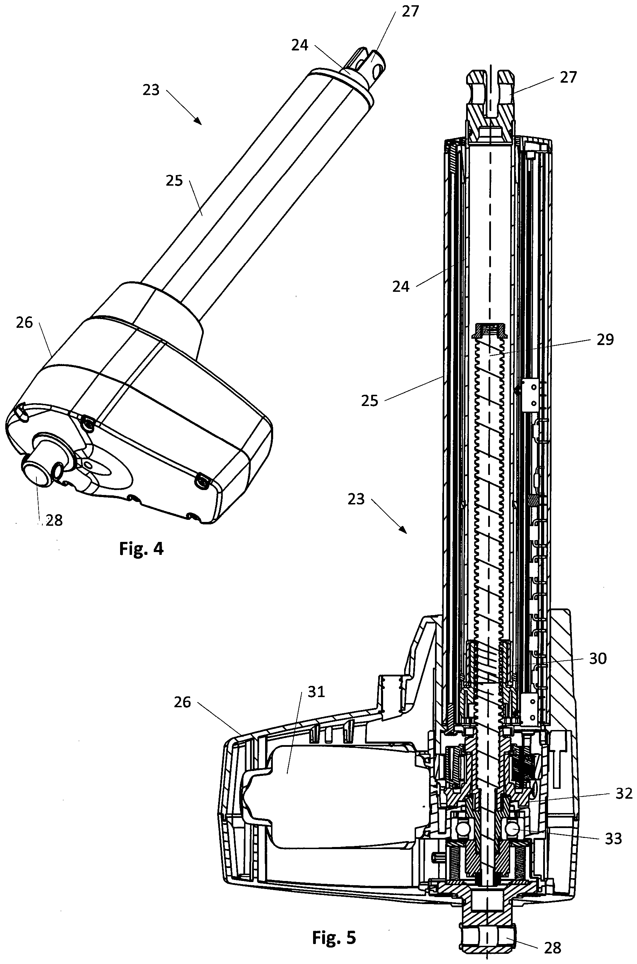

Fig. 4 shows a linear actuator 23 of the type comprising a piston rod described in the preamble and is thus of the same type as the linear actuators 9,10,13,14. The piston rod is also known as an inner tube. The linear actuator 23 comprises an outer tube 25 and a motor housing 26. The linear actuator 23 further comprises a front mounting 27 at the outer end of the inner tube 24 and a rear mounting 28 at the motor housing 36.

Fig. 5 shows the linear actuator in fig. 5, where the motor housing 26 and the outer tube 25 has been partially removed. The main features of the linear actuator 23 comprises a spindle unit consisting of a spindle 29 on which a spindle nut 30 is arranged. The spindle nut 30 can be secured against rotation. The inner tube 24 is secured to the spindle nut 30 and can thus be moved in and out of the outer tube 25 depending of the direction of rotation of the spindle 29. The spindle 29 is driven by a reversible electric motor 31 via a transmission. Here, the transmission comprises a worm arranged in continuation of the drive shaft of the electric motor, as well as a worm wheel 32 secured to the spindle 29. A bearing 33 is further secured to the spindle 29. The bearing 33 can e.g. be a ball bearing or a roller bearing.

The linear actuator 23 shown in figs. 4 and 5 only illustrates the main components. The linear actuator 23 can thus also be equipped with a braking device, additional bearings, quick release mechanism etc.

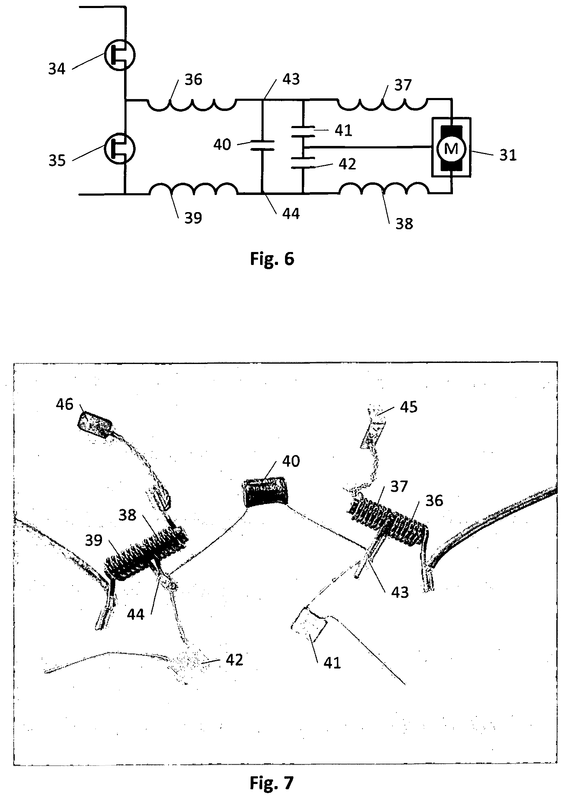

Fig. 6 shows a diagram for a circuit for electrical noise dampening of an electric motor for an output stage of a controller. The output stage of the controller, illustrated by means of the FET-transistors 34, 35 is a switch-mode controller, adapted for pulse width modulation of the operating voltage. In other words, the transistors function as switches, which are either completely open or completely closed. Application of a switch-mode controller provides advantages with regard to energy efficiency and speed control. When the transistor 34 is activated, while the transistor 35 is closed, a current runs through the inductance 36, further through the inductance 37 for operation of the electric motor 31 and further through the inductances 38 and 39. When the transistor 34 is interrupted while the transistor 35 is closed a current will still run due to the inductances. This current can be considered constant over a short period of time. Thus, an energy efficient speed control of the electric motor can be achieved by altering the opening and closing times of the transistors 34, 35. The electric motor will necessarily have to be electrically noise dampened, as the commutation, the electromagnetic coupling and the switch-mode controller produce electrical noise. The noise is dampened by means of a capacitor 40 inserted into the common middle point of the inductances 36,39 and the inductances 37,38. The inductances 36,39 are inserted in order to prevent an otherwise very high peak current, as the capacitor 40 is coupled in parallel to the transistors 34,35. A high peak current will make great demands on the ability of the transistors to handle large currents. Moreover, a high amount of power will be dissipated in the transistors 34, 35, as the resistivity thereof will result in a switch loss. Further, a capacitor 41, 42 is inserted, which efficiently dampens noise of the electric motor relative to the motor housing. The inductances 36, 39; 37, 38 are single coils, of which the coils 37, 38 are normally arranged in the housing of the electric motor and the coils 36, 39 are arranged in connection with the output stage of the controller. It is immediately apparent that the coils 36, 37 and 38, 39 have a common midpoint 43, 44. Thus, the two coils 36, 37 and 38, 39 according to the invention can be wound as one coil with a tap, on which the capacitors 40, 41, 42 are connected. This provides a simpler solution, where the cost price of the assembled component 36, 37 and 38, 39 is only slightly higher than the price of one single coil 36, 37, 38, 39. The solution further provides an effective noise dampening of the electric motor and can be used in connection with both a DC controller and a switch-mode controller, for which reason the customer and the manufacturer will not have to choose between variations with different types of electrical noise dampening and design noise dampening means themselves.

Fig. 7 shows a picture of the components of the electrical noise dampening according to the diagram in Fig. 6. The coils 36,37 and 38,39 are both wound as one interconnected coil with a tap 43,44 each. Thus, the tap 43 is located between the coil sections 36 and 37, while the tap 44 is located between the coil sections 38 and 39. The brushes 45,46 are connected to one end of the coils 36,37 and 38,39. The capacitor 40 is connected to the taps 43 and 44. One of the supply lines on each of the capacitors 41 and 42 are connected to the taps 43 and 44. The other supply line on each of the capacitors 41 and 42 are in fig. 7 not shown as being connected to anything, but are as shown in fig. 6 prepared for connection to the motor housing.

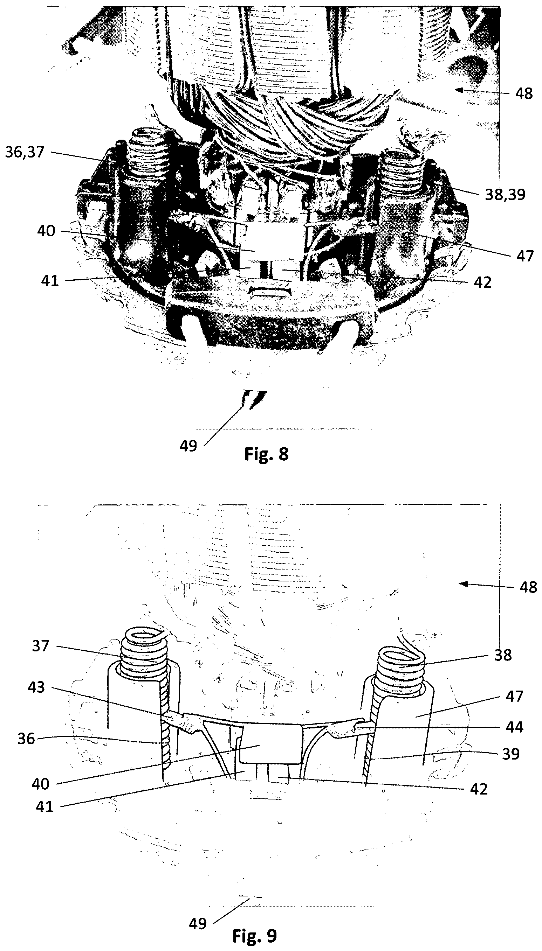

Figs. 8 and 9 shows a picture of the motor which has been opened and with focus on the electrical noise dampening according to the diagram in fig. 6, which here is arranged in connection with the brush holder 47 of the motor. It is thus noted that the motor housing is not shown. In fig. 9 the coils 36,37 and 38,39 as well as the capacitors 40,41,42 are sketched in order to highlight their position. In the background the armature 48 and the motor shaft 49 can be seen. It is particularly apparent that the coils 36, 37 and 38, 39 have been wound as one interconnected coil equipped with a central tap in the shape of a common midpoint 43, 44, to which the capacitors 40, 41, 42 are connected. This is both practical and financially advantageous, as the coils can be constructed in one cycle.

## Claims

1. Actuator system comprising:
• at least one electrically driven linear actuator (23) comprising an electric motor (31) with a motor housing and two brushes (45, 46), a transmission (32), a spindle (29) connected to the electric motor via the transmission, and a spindle nut (30) arranged on said spindle (29),
• and an electric controller (19) with an operating unit (17, 18),
**characterized in that** the actuator system further comprises:
• a first circuit for a first electrical noise dampening of the electric motor (31) comprising first inductances (37, 38) and two capacitors (41, 42), each of said first inductances (37, 38) having one end connected to one of the brushes (45, 46) of the motor (31);
• a second circuit for a second electrical noise dampening of the electric motor (31), arranged between the circuit for the first electrical noise dampening of the electric motor (31) and the electric controller, comprising second inductances (36, 39) and a capacitor (40); and
• two coils (36, 37; 39, 38), each coil wound as one coil, each comprising a first section, a second section and a tap (43; 44) located between said first and second sections, wherein the first section constitutes one of said first inductances (37; 38) and the second section constitutes one of said second inductances (36; 39),
wherein the capacitor (40) of the second circuit is connected between the taps (43, 44), and each capacitor (41, 42) of the first circuit is connected between one of the taps (43, 44) and the motor housing.

2. Actuator system according to claim 1,
**characterized in**
**that** the electric motor (31) is an electric DC motor with brushes.

3. Actuator system according to claim 1 or 2,
**characterized in**
**that** said tap (43, 44) is a common middle point dividing each coil (36, 37; 39, 38) into the first section and the second section.

4. Actuator system according to claim 3,
**characterized in**
**that** each coil (36, 37; 39, 38) comprises one interconnected winding.

5. Actuator system according to claim 3,
**characterized in**
**that** each coil (36, 37; 39, 38) as a unit is equipped with one core.

6. Actuator system according to claim 3,
**characterized in**
**that** each coil (36, 37; 39, 38) individually on each of the two sections is equipped with one core.

7. Actuator system according to claim 4 or 5,
**characterized in**
**that** the core is made from a material containing ferrite.

8. Actuator system according to claim 3,
**characterized in**
**that** the coils and the additional components in the first and second circuit for electrical noise dampening of the electric motor (31) are arranged in the housing of the electric motor or mounted on the terminals of the electric motor (31).

9. Actuator system according to claim 3,
**characterized in**
**that** the coils and the additional components in the first and second circuit for electrical noise dampening of the electric motor (31) are arranged in the housing of the actuator.

10. Actuator system according to claim 3,
**characterized in**
**that** the coils and the additional components in the first and second circuit for electrical noise dampening of the electric motor (31) are arranged in a separate housing.

11. Actuator system according to claim 3,
**characterized in**
**that** the coils and the additional components in the first and second circuit for electrical noise dampening of the electric motor (31) are arranged in the controller.

12. Actuator system according to claim 3,
**characterized in**
**that** the housing of the motor is furnished with means for retaining the coils during mounting and operation.

13. Actuator system according to claim 3,
**characterized in**
**that** the electric actuator includes a printed circuit board fitted with the components for the electrical noise dampening of the electric motor (31).

14. Actuator system according to claim 3,
**characterized in**
**that** the components for the electrical noise dampening of the electric motor (31) is arranged in a cable connection, connected to the electrical motor, or mounted directly in a socket for a plug connection to the motor (31).

15. Actuator system according to claim 10,
**characterized in**
**that** the housing is furnished with appropriate plug connections or is equipped with a through-going cable connection with appropriate plug connections.

## Patentansprüche

1. Aktuatorsystem, das aufweist:
• mindestens einen elektrisch angetriebenen Aktuator (23), der einen Elektromotor (31) mit einem Motorgehäuse und zwei Bürsten (45, 46), ein Getriebe (32), eine Spindel (29), die über das Getriebe mit dem Elektromotor verbunden ist, und eine auf der Spindel (29) angeordnete Spindelmutter (30) aufweist, und eine elektrische Steuerung (19) mit einer Betätigungseinheit (17, 18),
**dadurch gekennzeichnet, dass** das Aktuatorsystem weiter aufweist:
• eine erste Schaltung für eine erste elektrische Geräuschdämpfung des Elektromotors (31), die eine erste Induktivität (37, 38) und zwei Kondensatoren (41, 42) aufweist, wobei jede der ersten Induktivitäten (37, 38) mit einem Ende mit einer der Bürsten (45, 46) des Motors (31) verbunden ist;
• eine zweite Schaltung für eine zweite elektrische Geräuschdämpfung des Elektromotors (31), die zwischen der Schaltung für die erste elektrische Geräuschdämpfung des Elektromotors (31) und der elektrischen Steuereinrichtung angeordnet ist und zweite Induktivitäten (36, 39) und einen Kondensator (40) aufweist; und
• zwei Spulen (36, 37; 39, 38), wobei jede Spule als eine Spule gewickelt ist, wobei jede Spule einen ersten Abschnitt, einen zweiten Abschnitt und einen Abgriff (43; 44) aufweist, der zwischen dem ersten und zweiten Abschnitt angeordnet ist, wobei der erste Abschnitt eine erste Induktivität (37; 38) bildet und der zweite Abschnitt eine der zweiten Induktivitäten (36; 39) bildet,
wobei der Kondensator (40) der zweiten Schaltung zwischen die Abgriffe (43, 44) geschaltet ist und jeder Kondensator (41, 42) der ersten Schaltung zwischen einen der Abgriffe (43, 44) und das Motorgehäuse geschaltet ist.

2. Aktuatorsystem nach Anspruch 1, **dadurch gekennzeichnet, dass** der Elektromotor (31) ein elektrischer Gleichstrommotor mit Bürsten ist.

3. Aktuatorsystem nach Anspruch 1 oder 2, **dadurch gekennzeichnet, dass** der Abgriff (43, 44) ein gemeinsamer Mittelpunkt ist, der jede Spule (36, 37; 39, 38) in den ersten Abschnitt und den zweiten Abschnitt unterteilt.

4. Aktuatorsystem nach Anspruch 3, **dadurch gekennzeichnet, dass** jede Spule (36, 37; 39, 38) eine miteinander verbundene Wicklung aufweist.

5. Aktuatorsystem nach Anspruch 3, **dadurch gekennzeichnet, dass** jede Spule (36, 37; 39, 38) als eine Einheit mit einem Kern ausgestattet ist.

6. Aktuatorsystem nach Anspruch 3, **dadurch gekennzeichnet, dass** jede Spule (36, 37; 39, 38) einzeln auf jedem der beiden Abschnitte mit einem Kern ausgestattet ist.

7. Aktuatorsystem nach Anspruch 4 oder 5, **dadurch gekennzeichnet, dass** der Kern aus einem ferrithaltigen Material gebildet ist.

8. Aktuatorsystem nach Anspruch 3, **dadurch gekennzeichnet, dass** die Spulen und die zusätzlichen Komponenten in der ersten und zweiten Schaltung zur elektrischen Geräuschdämpfung des Elektromotors (31) im Gehäuse des Elektromotors angeordnet oder an den Anschlüssen des Elektromotors (31) montiert sind.

9. Aktuatorsystem nach Anspruch 3, **dadurch gekennzeichnet, dass** die Spulen und die zusätzlichen Komponenten in den ersten und zweiten Schaltungen zur elektrischen Geräuschdämpfung des Elektromotors (31) in dem Gehäuse des Aktuators angeordnet sind.

10. Aktuatorsystem nach Anspruch 3, **dadurch gekennzeichnet, dass** die Spulen und die zusätzlichen Komponenten in der ersten und zweiten Schaltung zur elektrischen Geräuschdämpfung des Elektromotors (31) in einem separaten Gehäuse angeordnet sind.

11. Aktuatorsystem nach Anspruch 3, **dadurch gekennzeichnet, dass** die Spulen und die zusätzlichen Komponenten in der ersten und zweiten Schaltung zur elektrischen Geräuschdämpfung des Elektromotors (31) in der Steuereinrichtung angeordnet sind.

12. Aktuatorsystem nach Anspruch 3, **dadurch gekennzeichnet, dass** das Gehäuse des Motors mit Mitteln zum Halten der Spulen während der Montage und des Betriebs versehen ist.

13. Aktuatorsystem nach Anspruch 3, **dadurch gekennzeichnet, dass** der elektrische Aktuator eine gedruckte Schaltungsplatine aufweist, die mit den Komponenten für die elektrische Geräuschdämpfung des Elektromotors (31) ausgestattet ist.

14. Aktuatorsystem nach Anspruch 3, **dadurch gekennzeichnet, dass** die Komponenten für die elektrische Geräuschdämpfung des Elektromotors (31) in einer Kabelverbindung angeordnet und mit dem Elektromotor verbunden oder direkt in einer Buchse für eine Steckverbindung mit dem Motor (31) montiert sind.

15. Aktuatorsystem nach Anspruch 10, **dadurch gekennzeichnet, dass** das Gehäuse mit einer geeigneten Steckverbindung versehen ist oder mit einer durchgehenden Kabelverbindung mit geeigneten Steckverbindungen ausgestattet ist.

## Revendications

1. Système d'actionneur comprenant:
• au moins un actionneur linéaire à entraînement électrique (23) comprenant un moteur électrique (31) avec un carter de moteur et deux balais (45, 46), une transmission (32), un axe (29) connecté au moteur électrique via la transmission, et un écrou d'axe (30) agencé sur ledit axe (29),
• un appareil de contrôle électrique (19) avec une unité de commande (17, 18),
**caractérisé en ce que** le système d'actionneur comprend en outre:
• un premier circuit pour un premier amortissement du bruit électrique du moteur électrique (31) comprenant des premières inductances (37, 38) et deux condensateurs (41, 42), chacune desdites premières inductances (37, 38) ayant une extrémité connectée à l'un des balais (45, 46) du moteur (31);
• un second circuit pour un second amortissement du bruit électrique du moteur électrique (31), agencé entre le circuit pour le premier amortissement du bruit électrique du moteur électrique (31) et l'appareil de contrôle électrique, comprenant des secondes inductances (36, 39) et un condensateur (40); et
• deux bobines (36, 37; 39, 38), chaque bobine enroulée en tant qu'une bobine, chacune comprenant une première section, une seconde section et une prise de réglage (43; 44) située entre lesdites première et seconde sections, dans lequel la première section constitue l'une desdites premières inductances (37; 38) et la seconde section constitue l'une desdites secondes inductances (36; 39),
dans lequel le condensateur (40) du second circuit est connecté entre les prises de réglage (43, 44), et chaque condensateur (41, 42) du premier circuit est connecté entre l'une des prises de réglage (43, 44) et le carter de moteur.

2. Système d'actionneur selon la revendication 1, **caractérisé en ce que** le moteur électrique (31) est un moteur CC électrique avec des balais.

3. Système d'actionneur selon la revendication 1 ou 2, **caractérisé en ce que** ladite prise de réglage (43, 44) est un point médian commun divisant chaque bobine (36, 37; 39, 38) en la première section et la seconde section.

4. Système d'actionneur selon la revendication 3, **caractérisé en ce que** chaque bobine (36, 37; 39, 38) comprend un enroulement interconnecté.

5. Système d'actionneur selon la revendication 3, **caractérisé en ce que** chaque bobine (36, 37; 39, 38) en tant qu'unité est équipée d'un noyau.

6. Système d'actionneur selon la revendication 3, **caractérisé en ce que** chaque bobine (36, 37; 39, 38) individuellement sur chacune des deux sections est équipée d'un noyau.

7. Système d'actionneur selon la revendication 4 ou 5, **caractérisé en ce que** le noyau est constitué d'un matériau contenant de la ferrite.

8. Système d'actionneur selon la revendication 3, **caractérisé en ce que** les bobines et les composants additionnels dans le premier et le second circuit pour l'amortissement du bruit électrique du moteur électrique (31) sont agencés dans le carter du moteur électrique ou montés sur les bornes du moteur électrique (31).

9. Système d'actionneur selon la revendication 3, **caractérisé en ce que** les bobines et les composants additionnels dans le premier et le second circuit pour l'amortissement du bruit électrique du moteur électrique (31) sont agencés dans le carter de l'actionneur.

10. Système d'actionneur selon la revendication 3, **caractérisé en ce que** les bobines et les composants additionnels dans le premier et le second circuit pour l'amortissement du bruit électrique du moteur électrique (31) sont agencés dans un carter séparé.

11. Système d'actionneur selon la revendication 3, **caractérisé en ce que** les bobines et les composants additionnels dans le premier et le second circuit pour l'amortissement du bruit électrique du moteur électrique (31) sont agencés dans l'appareil de contrôle.

12. Système d'actionneur selon la revendication 3, **caractérisé en ce que** le carter du moteur est muni de moyens pour maintenir les bobines pendant le montage et l'utilisation.

13. Système d'actionneur selon la revendication 3, **caractérisé en ce que** l'actionneur électrique inclut une carte de circuit imprimé équipée des composants pour l'amortissement du bruit électrique du moteur électrique (31).

14. Système d'actionneur selon la revendication 3, **caractérisé en ce que** les composants pour l'amortissement du bruit électrique du moteur électrique (31) sont agencés dans une connexion par câble, connectés au moteur électrique ou montés directement dans une prise de courant pour une connexion par fiche au moteur (31).

15. Système d'actionneur selon la revendication 10, **caractérisé en ce que** le carter est muni de connexions par fiches appropriées ou est équipé d'une connexion par câble traversant avec des connexions par fiches appropriées.
